# EUROPEAN PATENT APPLICATION

(11) **EP 1 670 169 A2**
(43) Date of publication of application: **14.06.2006**
(21) Application number: 05025235.2
(22) Date of filing: 18.11.2005
(51) Int. Cl.: H04L 1/20

(54) **Wireless LAN device and method of monitoring status of wireless LAN**

(30) Priority: 09.12.2004 KR 2004103636
(71) Applicant: LG Electronics Inc., Yongdungpo-gu Seoul (KR)
(72) Inventor: Um, Soung, Hyun, Dongan-gu Anyang-si Gyeonggi-do 431-760 (KR); Kwak, Dong, Hoon 408-1502 Lotte Seongyeong Apt., Bundang-gu Seongnam-si Gyeonggi 463-738 (KR); Chol, Hyeon, Cheol, Bundang-gu Seongnam-si Gyeonggi 463-922 (KR); Hahn, Dong, Woon, Seoul 140-744 (KR); Lee, Hee, Youn 3-1005 Sanga Apt., Seoul 135-508 (KR); Hwang, Min, Ho, Seoul 137-140 (KR)
(74) Representative: Katérle, Axel

(57) **Abstract**

A wireless LAN device and a method of monitoring the status of a wireless LAN are disclosed. The wireless LAN device according to the present invention can determine the status of a wireless LAN using a variety of information obtained by performing media access control (MAC) without additional packet transmission/reception with a correspondent wireless LAN device. Accordingly, if the wireless LAN device of the present invention is various kinds of wireless A/V (Audio/Video) devices that provide the A/V streaming, the data transmission can be optimally made in accordance with the status of the monitored wireless LAN. Further, since there is no additional communication needed to monitor the status of a wireless LAN, the present invention has advantages in that the processing speed of the wireless LAN device is improved and the traffic of the wireless LAN is not increased.

## Description

### BACKGROUND OF THE INVENTION

### Field of the Invention

The present invention relates to a wireless LAN device and a method of monitoring the status of a wireless LAN, and more specifically, to a wireless LAN device and a method of monitoring the status of a wireless LAN, which are capable of monitoring the status of a wireless LAN with respect to a correspondent nodes without separate communications between wireless LAN transmission/reception nodes through packet transmission/reception.

### Description of the Related Art

In recent years, products for A/V streaming (Audio/Video streaming) by way of a wireless LAN, such as a wireless TV or a wireless speaker, have been developed and put on the market. For the purpose of A/V streaming by way of a wireless LAN, the current status of the wireless LAN should be monitored and then an encoding bit rate of streams and the wireless LAN setup should be adjusted.

Therefore, when the A/V streaming is provided via a wireless LAN, the status of the wireless LAN corresponding to basic information should be preferentially monitored to guarantee Quality of Service (QoS) of the wireless LAN.

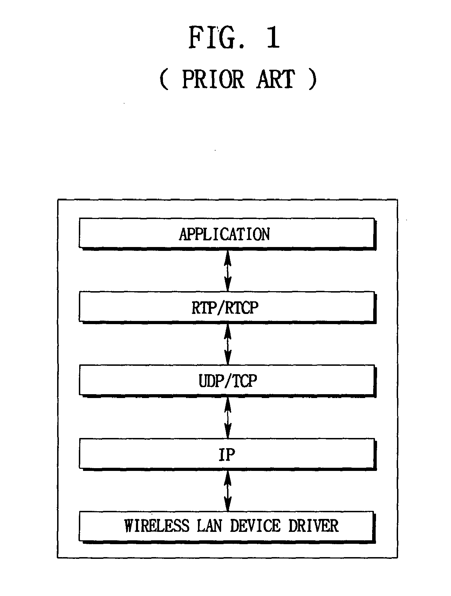

FIG. 1 illustrates the operation of monitoring the status of a wireless LAN according to the prior art. As shown in this figure, an RTP/RTCP (Real-time Transport Protocol / Real-time Transport Control Protocol) layer is loaded on a UDP/TCP (User Datagram Protocol/Transmission Control Protocol) layer.

The RTP is a protocol for transmitting data having a real-time property and provides a function of large-scale transmission services required in an application program for transmitting real-time information such as interactive audio/video data or simulation data.

In a wireless LAN environment, RTP technologies are generally used to process a variety of application services as stably and effectively as users wish. The RTP, per se, does not guarantee the real-time transmission, transmission sequences, or support different kinds of services, but transmits information through RTP packets such that data can be reorganized only at a receiving end.

In addition to the RTP, the RTCP, which is a control protocol, is involved to monitor the data transmission and provide minimum control and authorization functions in the data transmission. RTCP packets are control packets which are periodically transmitted by all participants in a session, and the packets provide feedbacks for QoS of the transmitted data and convey transport layer IDs (Identifiers) for RTP sources. Since wireless LAN devices can identify the number of participants based on the RTCP packets, they can control the transmission speed.

To monitor the status of a wireless LAN, an RTP/RTCP layer is added between a UDP/TCP layer and an application layer in a route where data transmitted from a driver layer of the wireless LAN device reach the application layer via an IP and the UDP/TCP layers, so that the status of the wireless LAN can be monitored.

Because the RTP/RTCP packets are transmitted to monitor a channel state in such a conventional method, the traffic of a wireless LAN is increased and a wireless LAN throughput is consequently reduced.

Further, the conventional structure for monitoring the status of a wireless LAN in which the RTP/RTCP layer is loaded above the UDP/TCP layer has difficulty in integrating an RTP/RTCP layer to an application layer.

In addition, a large amount of CPU processing time is consumed to implement an RTP/RTCP, and an overhead of the RTP/RTCP may be further increased in an embedded system where the CPU processing speed is slow.

### SUMMARY OF THE INVENTION

Accordingly, an object of the present invention is to provide a wireless LAN device and a method of monitoring the status of a wireless LAN, which are capable of monitoring the status of a wireless LAN with respect to a correspondent wireless LAN device using previously produced information without the need to transmit/receive separate data packets.

Further, another object of the present invention is to provide a wireless LAN device capable of separately controlling transmission rate for wireless A/V streaming according to a channel state with respect to at least one wireless LAN device connected herein.

In accordance with an aspect of the present invention the aforementioned objects are achieved by a method of monitoring the status of a wireless LAN. The method involves data communication with a wireless LAN device and extracting predetermined data transmission information through a media access control (MAC), including packet transmission/reception status and received signal strength during data communication. The method further involves determining a channel state with respect to the wireless LAN device by comparing a preset reference value with the data transmission information for each channel state classified by a predetermined method.

In accordance with another aspect of the present invention, the aforementioned objects are achieved by a wireless LAN device. The LAN device comprises a physical layer processor for performing any one of modulation and demodulation of transmitted/received data, the physical layer processor being connected to a wireless LAN to which at least one other wireless LAN device is connected. The LAN device also comprises a MAC controller interfacing with the physical layer processor and performing media access control and a memory. Still further, the LAN device comprises a main control unit for controlling data communication with the at least one other wireless LAN device by interfacing with the MAC controller, and for determining a channel state with respect to the at least one other wireless LAN device by extracting data transmission information regarding packet transmit/receive status and received signal strength from the MAC controller and then comparing the data transmission information with a predetermined reference value stored in the memory.

### BRIEF DESCRIPTION OF THE DRAWINGS

The above and other objects, features and advantages of the present invention will become apparent from the following description of preferred embodiments given in conjunction with the accompanying drawings, in which:
FIG. 1 is a diagram illustrating the operation of monitoring the status of a wireless LAN according to the prior art;
FIG. 2 is a diagram illustrating the configuration of a network including wireless LAN devices according to the present invention;
FIG. 3 is a diagram illustrating the operation of a wireless LAN device according to the present invention;
FIG. 4 is a diagram illustrating a monitoring step of FIG. 3 in more detailed manner;
FIG. 5 is a diagram illustrating a method of monitoring the status of a wireless LAN according to another embodiment of the present invention; and
FIG. 6 is a diagram illustrating a method of monitoring the status of a wireless LAN with respect to a plurality of wireless LAN devices according to the present invention.

### DETAILED DESCRIPTION OF THE PREFERRED EMBODIMENTS

Hereinafter, preferred embodiments of the present invention will be described in detail with reference to the accompanying drawings.

First, a wireless LAN device capable of being connected to a wireless LAN to transmit/receive data monitoring the status of a wireless LAN according the present invention. Further, such a wireless LAN device may be included in other devices or connected to other devices through a separate interface in a wired or wireless manner.

A wireless device of the present invention supports an ad-hoc or infrastructure mode. The infrastructure mode will be mainly centered on a proper explanation of the present invention. In this case, the wireless device of the present invention may correspond to an AP (Access Point).

Preferably, a wireless AV (Audio/Video) streaming device capable of streaming at least one of video or audio signals to other devices on a wireless LAN can be used as the device of the present invention. Various kinds of repeaters, APs and severs connected to wireless TVs, wireless DVDs, wireless set-top boxes, telephones supporting VoIP, wireless speakers or the like may serve as the wireless A/V streaming devices.

Neither a wireless A/V streaming device nor the other kind of wireless LAN device, as applied to the present invention, transmits/receives separate packets for monitoring a channel state with respect to a correspondent wireless LAN device connected through a corresponding channel of a wireless LAN. Instead, a channel state with respect to a correspondent wireless LAN device can be monitored using a variety of information received through the existing connection, so that QoS (Quality of Services) of a wireless LAN can be ensured.

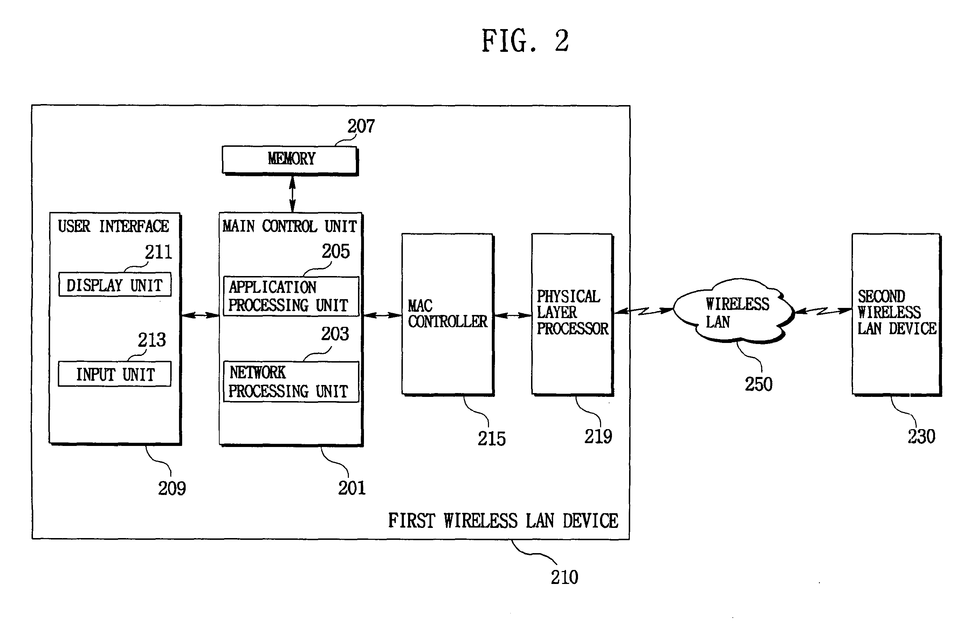

A wireless LAN device of the present invention will be described hereinafter with reference to FIG. 2. For the proper explanation of the present invention, assume that a wireless LAN streams A/V data in a wireless mode. At this time, this will be described based on the status that a streaming server is connected to a streaming client through the wireless LAN. Here, the wireless LAN device of the present invention functions as a "streaming server," while a correspondent device connected to the wireless LAN of the present invention functions as a "streaming client".

Referring to FIG. 2, a plurality of wireless LAN devices (not shown) including a first wireless LAN device (210) operating as a streaming server of the present invention and a second wireless LAN device (230) operating as a streaming client corresponding to the first wireless LAN device are connected to a wireless LAN (250).

The first wireless LAN device (210) includes a main control unit (201), a memory (207), a user interface (209), an MAC (Media Access Control) controller (215) and a physical layer processor (217).

The main control unit (201) includes a network processing unit (203) and an application processing unit (205). The main control unit (201) controls the whole functions of the first wireless LAN device (210) and also provides a variety of interfaces with a user through the user interface (209).

If the second wireless LAN device (230) is one of a wireless TV, a wireless DVD, a wireless set-top box, a telephone supporting VoIP and a wireless speaker, the application processing unit (205) processes various kinds of applications for supporting the second wireless LAN device (230). In other words, the application processing unit (205) is capable of performing an A/V streaming control, a relaying function of APs, and a relay control for VoIP.

The network processing unit (203) performs a variety of controls in accordance with a wireless LAN protocol for data communication with the second wireless LAN device (230).

Further, the network processing unit (203) monitors a channel state with respect to the second wireless LAN device (230) using a variety of information transmitted through the MAC controller (215) and then transmits the channel state to the application processing unit (205).

The memory (207) includes a variety of volatile and non-volatile memories. The memory (207) includes a program ROM (Read Only Memory) for storing various kinds of control programs, application programs and the like of the main control unit (201), and a ROM or RAM (Random Access Memory) for storing information which is transmitted from the MAC controller (215) or produced for a variety of controls.

Further, the memory (207) stores a status table corresponding to various kinds of reference values for use in channel state monitoring.

The user interface (209) includes a display unit (211) and an input unit (213).

The display unit (211) displays a variety of information transmitted from the main control unit (201) to a user, while the input unit (213) receives various kinds of control commands and other commands for selection and setup from a user and then transmits the commands to the main control unit (201).

The MAC controller (215) is connected to the physical layer processor (217) and performs a media access control over a network. Further, the MAC controller (215) transmits/receives data packets to/from a correspondent wireless LAN device. The MAC controller (215) may include a separate memory.

The physical layer processor (217) includes a modem (not shown) and an RF (Radio Frequency) unit (not shown), and functions as a physical layer for connecting a wireless network and modulating packets to be transmitted/received on the network.

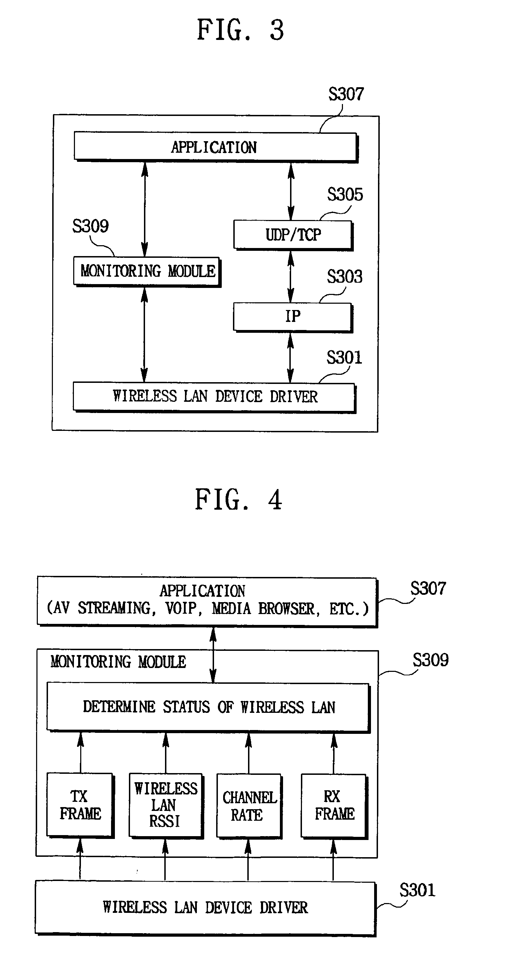

In general, the MAC controller (215) and the physical layer processor (217) may be attached to separate from the first wireless LAN device (210), the first wireless LAN device (210) in the form of a wireless LAN card or, alternatively, they may be in the form of a separate external device connected to the first wireless LAN device (210) through a cable or the like.
Hereinafter, a method of monitoring the status of a wireless LAN by the network processing unit (203) according to the present invention will be described with reference to FIGS. 3 and 4.

As shown in FIG. 3, a method of monitoring the status of a wireless LAN of the present invention includes functionally divided steps. Such steps may correspond to respective layers of software which implements the wireless LAN.

Referring to FIG. 3, the method of monitoring the status of a wireless LAN comprises a WLAN (Wireless LAN) device driver step S301, an IP (Internet Protocol) step S303, a UDP/TCP step S305, an application step S307, and a monitoring module step S309.

The description of monitoring method of FIG. 3 will be based on the first wireless LAN device (210) and the wireless LAN (250) shown in FIG. 2. Here, a program for substantially executing the operation shown in FIG. 3 can be stored in a separate program ROM, and such a method of monitoring the status of a wireless LAN is executed in the network processing unit (203) of the first wireless LAN device (210). On the other hand, the application step S307 is executed in the application processing unit (205).

The first wireless LAN device (210) receives data from the second wireless LAN device (230) in accordance with a method sequentially executed from the WLAN device driver step S301 to the application step S307, and transmits predetermined data to the second wireless LAN device (230) in accordance with a method sequentially executed from the application step S307 to the WLAN device driver step S301.

The first wireless LAN device (210) directly monitors a channel state with respect to the connected second wireless LAN device (230), based on the execution results of WLAN device driver step S301, apart from the method sequentially executed in a sequence of steps S301 to S307 (or vice versa).

Each component beginning with the WLAN device driver S301 through the application layer S307 and the interfaces there between executes the protocols of a wireless LAN device driver layer, an IP layer, a UDP/TCP layer and an application layer in accordance with a general wireless LAN standard, which are known to those skilled in the art. The operations of steps S301 to S307 should not be limited or restricted to the brief explanation below.

The WLAN device driver step S301 provides an interface between the IP step S303 and the MAC controller (215) for performing the media access control such that the main control unit (201) or the network processing unit (203) can recognize the MAC controller (215). The WLAN device driver step S301 is configured to either transmit packets from the IP step S303 to the MAC controller (215) or process packets transmitted from the MAC controller (215) and then transmit the packets to the IP step S303.

The WLAN device driver step S301 provides the IP step S303 and the monitoring module S309 with a variety of data transmission information, which are required to execute the monitoring module S309 by the network processing unit (203), by using results processed by the MAC controller (215).

At this time, the data transmission information includes information on the transmission/reception status of packets, received signal strength and the like.

The IP step S303 means a method for performing the communications with other devices (not shown) on a wireless LAN in accordance with an Internet protocol and providing an interface between the UDP/TCP step S305 and the WLAN device driver S301.

When performing the communication with the second wireless LAN device (230) serving as a correspondent wireless LAN device using an IP, the UDP/TCP step S305 implements a UDP/TCP protocol to receive messages or converts messages to be transmitted to the second wireless LAN device (230) in accordance with a relevant protocol in order to allow the IP step S303 to be executed based on results processed at the IP layer.

The TCP protocol provides a reliable connection-oriented service in the form of streams, which is capable of performing an error control and flow control by means of retransmission, and provides the connections between end points, retransmission of data during error generation, identification of packet transmission orders, removal of duplicated packets, flow control and reporting malfunctions on a network, and the like.

The UDP protocol provides a connectionless service offering neither retransmission nor flow control, and simply transmits the packets one by one to a target address.

The application step S307 executed by the application processing unit (205) performs the final data processing and provides various kinds of interfaces through the user interface (209). For example, if the first wireless LAN device (210) is a wireless A/V device for providing the wireless A/V streaming, a variety of controls including a streaming transmission rate control can be performed.

The monitoring step S309 is performed separately from a data processing method through steps S301 to S307 (or vice versa). The monitoring step S309 monitors the channel state with respect to the second wireless LAN device (230) connected through a corresponding channel on the wireless LAN (250) based on results executed at the WLAN device driver step S301 and provides the application step S307 with the monitored results.

In case of the wireless streaming, the network processing unit (203) continuously monitors the channel state with respect to the correspondent second wireless LAN device (230) and provides the monitored results to the application processing unit (205) by implementing the monitoring step S309. Accordingly, the application processing unit (205) can adjust a transmission rate of the streaming data in accordance with the channel state.

Therefore, the first wireless LAN device (210) of the present invention can determine the status of a wireless LAN without performing a separate data communication for monitoring the channel state with respect to the second wireless LAN device (230) on the wireless LAN.

Hereinafter, a method of monitoring the status of a wireless LAN in the monitoring step S309 of FIG. 3 will be described in detail with reference to FIG. 4.

In the monitoring step S309, the status of a wireless LAN is determined by using the data transmission information provided from the WLAN device driver step S301, and the determined results are provided to the application step S307.

The data transmission information provided from the WLAN device driver step S301 includes the number of transmitted packets (TxFrame), the number of received packets (RxFrame), the received signal strength and the channel rate, which can all be based on a general wireless LAN standard.

Here, the number of transmitted packets means the number of unicast frames whose transmission to the correspondent second wireless LAN device (230) has been successfully made via the relevant channel of the wireless LAN.

The number of received packets means the number of all received frames calculated with packets received from the relevant channel via a physical layer regardless of their addresses or packet types. Thus, the number of received packets is calculated regardless of whether or not their destination is towards the first wireless LAN device (210).

Further, the received signal strength means the signal strength of a frame received from the second wireless LAN device (230), and the channel rate means the transmission capacity per time of frames that are currently being transmitted.

In the monitoring step S309, a throughput of a relevant channel on the wireless LAN (250) is first determined based on an accumulated value of the number of transmitted packets per unit time.

If the accumulated value of the number of transmitted packets is large, the number of a single transmission frame will be large, which may suggest that a channel state is satisfactory. The network processing unit (203) can determine the change in the channel state using the rate of change in the accumulated value of the number of transmitted packets. Thus, if a corresponding transmission rate is greater than a predetermined reference value in case of data streaming, the first wireless LAN device (210) may consider increasing the streaming transmission rate.

The number of received packets can be used to determine whether the number of wireless LAN devices that transmit/receive data through a corresponding channel is large or not. Thus, the activity of the channel can be determined.

In the monitoring step S309, therefore, the value obtained by subtracting the number of transmitted packets from the number of received packets can be used to calculate the number of frames transmitted from the other wireless LAN devices (not shown) that are not connected but operated on the channel, i.e., the degree of interference of the wireless LAN.

Further, in the monitoring step S309, the distance between or the presence of an obstacle between the first wireless LAN device (210) (i.e., a transmission node) and the second wireless LAN device (230) (i.e., a reception node) is evaluated using the received signal strength. That is, if the received signal strength is low, the distance between the transmission and reception nodes of a wireless LAN may be far or there may exist an obstacle therebetween. The received signal strength generally uses RSSI (Received Signal Strength Identity) or RCPI (Received Channel Power Indicator). In a case where both RSSI (general 802.11 wireless LAN) and RCPI (802.11k support wireless LAN) are supported, RCPI is preferably used.

The RCPI is a parameter defined in IEEE 802.11k corresponding to a standard with which a new specification for the radio resource measurement is established.

Finally, the channel rate is usually expressed as data capacity per time (byte/sec) transmitted from the MAC controller (215). Thus, the maximum throughput per time of data that the first wireless LAN device (210) can practically transmit can be estimated based on the aforementioned channel rate. In general, the maximum throughput of real data does not come close to the current channel rate.

The network processing unit (203) transmits determined results obtained in the monitoring step S309 to the application processing unit (205).

The aforementioned four kinds of data transmission information become data capable of determining the channel state individually or combined. In the monitoring step S309, a target value requested by an application, which is processed in the application step S307 of the application processing unit (205) based on such data information, is provided.

For example, if an application processed in the application step S307 needs to control the A/V streaming and adjust the encoding rate depending on the channel state, an appropriate encoding rate can be determined and then provided based on the channel state in accordance with a predetermined reference. Moreover, if an application needs to request specific information or selection item in which the channel state is considered, it can be provided through the monitoring step S309.

Therefore, in a case where QoS should be ensured in data transmission va a wireless LAN using A/V streaming, VoIP (Voice over Internet Protocol) or the like, the first wireless LAN device (210) should be designed to determine the current channel state of the wireless LAN by using the monitoring step S309 of the present invention, whereby the QoS of data transmission can be guaranteed.

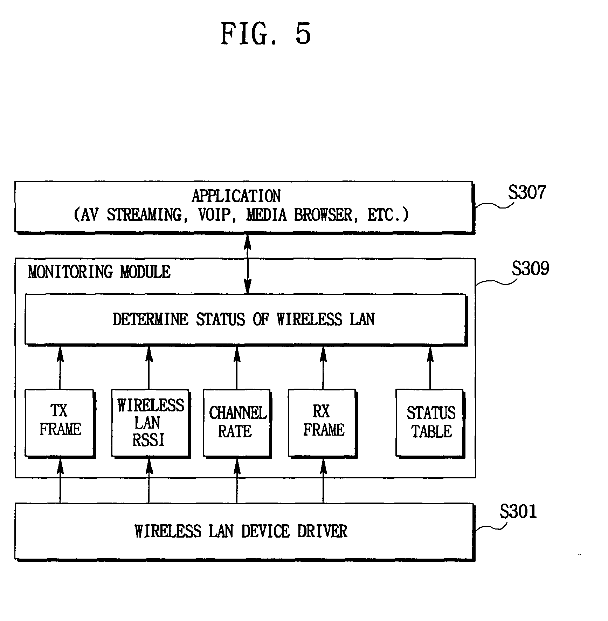

Hereinafter, a method of monitoring the wireless LAN status according to another embodiment of the present invention will be described with reference to FIG. 5.

Referring to FIG. 5, the network processing unit (203) of the first wireless LAN device (210) according to the present invention can perform a monitoring step S509 in which a status table is used. Here, the monitoring step S509 corresponds to the monitoring step S309 of FIG. 3, and it is also executed between the WLAN device driver S301 and the application step S307.

The number of transmitted packets, the number of received packets, the received signal strength and the channel rate are defined the same as those of FIG. 4, respectively.

The status table is a database that serves as a criterion against which the channel state may be monitored using the data transmission information, including the number of transmitted packets, the number of received packets, the received signal strength, and the channel rate. Such a status table can be stored in the memory (207) of the first wireless LAN device (210).

The criterion included in the status table is a criterion required to guarantee QoS of the data transmission, and it varies according to various kinds of applications processed in the application processing unit (205). In addition, such a criterion can vary according to various kinds of transmission modes with which the application processing unit (205) provides the second wireless LAN device (230). Therefore, it is possible to monitor various applications by changing the reference values of the status table in various manners.

For example, the first wireless LAN device (210) of the present invention can dynamically change an MPEG encoding bit rate into 2 Mbps or 4 Mbps depending on the channel state of a wireless LAN. In this case, the first wireless LAN device (210) stores information on the respective channel states capable of transmitting the streams encoded into 2 Mbps and 4 Mbps in the status table, and adjusts the encoding bit rate accordingly.

Accordingly, the network processing unit (203) of the first wireless LAN device (210) compares a reference value in the status table corresponding to a current transmission encoding rate with each of numerical values of the data transmission information actually conveyed from the WLAN device driver step S301, and then determines whether to sustain, raise or lower the current encoding rate.

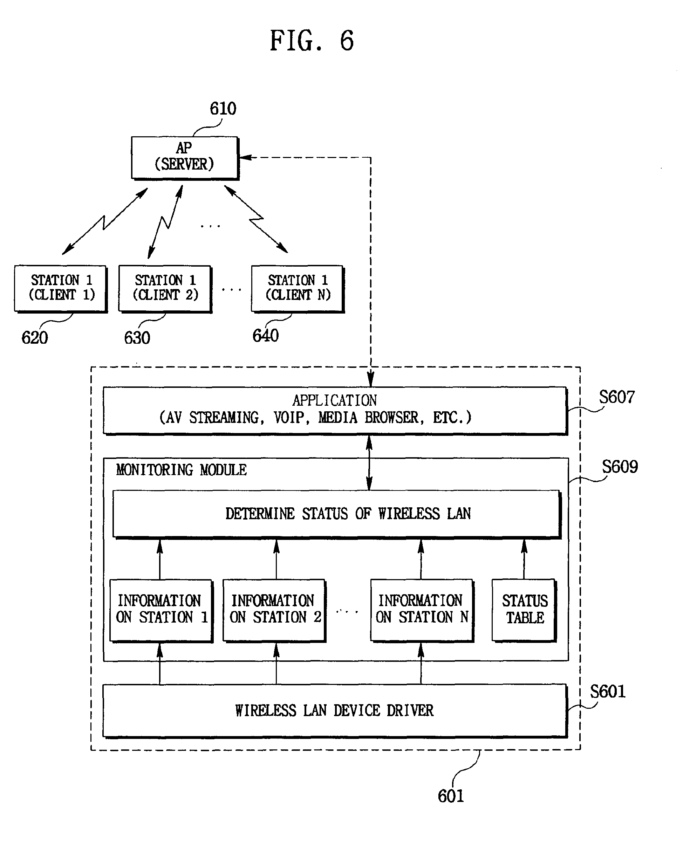

Hereinafter, a method of monitoring the status of a wireless LAN device with respect to a plurality of correspondent wireless LAN devices according to the present invention will be described with reference to FIG. 6.

The wireless LAN device of the present invention can monitor the channel state with respect to not only a single wireless LAN device but also a plurality of wireless LAN devices at the same time, while operating as an AP (Access Point) which functions as a server for performing the wireless A/V streaming. Accordingly, the wireless LAN device of the present invention can perform the multi-station management such as a multi-streaming process for a plurality of streaming clients.

Referring to FIG. 6, an AP (610) is connected with first to third clients (620, 630, 640) via a wireless LAN and separately transmits A/V streaming data to each of the clients (620, 630, 640).

The AP (610) of FIG. 6 corresponds to the first wireless LAN device (210) of FIG. 2. However, as described above, the AP (610) communicates with not only a single wireless LAN device but also a plurality of wireless LAN devices and also monitors the channel state with respect to such wireless devices. Here, the first to third clients (620, 630, 640) correspond to the second wireless LAN device (230).

In FIG. 6, a portion indicated by a dotted line illustrates the operation of a main control unit (601) that corresponds to one of components of the AP (610). The main control unit (601) includes a network processing unit (not shown) and an application control unit (not shown), of which operations generally correspond to those of the network processing unit (203) and the application processing unit (205) in FIG. 2, respectively.

The network processing unit (not shown) determines information on the channel state with respect to each of the first to third clients (620, 630, 640) based on results executed in a WLAN device driver step S601. In this case, the wireless LAN status information includes the number of transmitted packets, the received signal strength and the channel rate, except for the number of received packets. The network processing unit (not shown) determines the channel state with respect to each station connected to the AP (610) based on the wireless LAN status information, and then provides the determined results to the application processing unit (not shown), by executing the monitoring step S609.

Accordingly, the application processing unit (not shown) executes an application step S607 for controlling the data transmission to each client.

Therefore, the wireless LAN device of the present invention can use encoding bit rates and transmission powers different to each other according to the respective stations when performing the A/V streaming.

In the same manner as the embodiment shown in FIG. 5, the wireless LAN device of the present invention can use a status table for reference values for determining the status of a wireless LAN when monitoring a plurality of stations.

As described in details above, the wireless LAN device of the present invention monitors the channel states with respect to the other connected wireless LAN devices on a wireless LAN such that an optimal data transmission/reception control can be performed according to the status of the network. For example, in case of the wireless AV streaming, the wireless LAN device can monitor the status of a wireless LAN for each of the other connected wireless LAN devices on the wireless LAN, and individually adjust the transmission rate in accordance with the monitored results.

Further, the wireless LAN device of the present invention does not have to transmit/receive additional packets in order to monitor the communication channel state with respect to the other connected wireless LAN devices. Accordingly, the present invention has an advantage in that the CPU usage rate for monitoring is minimized without the need to lower the throughput of target data because no additional traffic for monitoring is generated.

Furthermore, there is another advantage in that a monitoring method of the present invention can be used in any wireless LAN application and help to reduce the period of time needed for developing a wireless LAN application because the channel state can be determined from the information that has been previously produced or it can be readily known without separate packet transmission.

In addition, the present invention has an advantage in that the status of the wireless LAN can be determined and estimated in accordance with the usage of applications, by allowing the reference values for the status of a wireless LAN in a status table to be changed according to applications.

The present invention can be implemented into a method, a device, or a system. Further, when the present invention is implemented into computer software, the components of the present invention can be replaced with code segments necessary to perform desired operations. The programs or code segments can be either stored in a medium that can be processed by a microprocessor or transmitted in the form of computer data combined with carrier waves through transmission media or communication networks.

The mediums that can be processed by a microprocessor include those capable of transmitting and storing information, such as electronic circuits, semiconductor memory devices, ROMs, flash memories, EEPROMs, floppy disks, optical disks, hard disks, optic fibers, and wireless networks. In addition, the computer data include those that can be transmitted through electrical network channels, optic fibers, electromagnetic fields, wireless networks or the likes.

Although the present invention has been described in detail in connection with the preferred embodiments, it is not limited thereto. It will be readily understood by those skilled in the art that various modifications and changes can be made thereto within the technical spirit and scope of the present invention. It is also apparent that the modifications and changes fall within the scope of the present invention defined by the appended claims.

## Claims

1. A method of monitoring the status of a wireless LAN, the method comprising:
performing data communication with a wireless LAN device;
extracting predetermined data transmission information through a media access control (MAC), including packet transmission/reception status and
received signal strength during data communication; and
determining a channel state with respect to the wireless LAN device by comparing a preset reference value with the data transmission information for each channel state classified by a predetermined method.

2. The method as claimed in claim 1, wherein the data communication involves a video data stream or an audio data stream, and wherein determining the channel state involves determining an encoding rate for data streaming to the wireless LAN device based on the determined channel state.

3. The method as claimed in claim 1, wherein the data transmission information is at least one of a number of transmitted packets corresponding to a number of unicast frames whose transmission, per unit time to the wireless LAN device, has been successfully made, a number of received packets corresponding to a number of frames received through a communication channel with the wireless LAN device, received signal strength corresponding to frames received from the wireless LAN device, and a channel rate corresponding to transmission capacity per time of frames that can be currently transmitted through a media access control.

4. The method as claimed in claim 3, wherein determining the channel state involves determining whether the channel state is satisfactory if the number of the transmitted packets is greater than a predefined number.

5. The method as claimed in claim 3, wherein determining the channel state involves determining whether the number of other wireless LAN devices which are transmitting/receiving data through a relevant channel is relatively large if the number of the received packets is greater than a predefined number.

6. The method as claimed in claim 3, wherein determining the channel state involves determining the number of frames transmitted from other wireless LAN devices, which are not connected but are operating on the communication channel, based on a value obtained by subtracting the number of transmitted packets from the number of received packets.

7. The method as claimed in claim 3, wherein determining the channel state involves determining whether a distance from the wireless LAN device is greater than a predefined distance, or whether there exists an obstacle that is degrading the received signal strength.

8. The method as claimed in claim 7, wherein the received signal strength is one of RSSI (Received Signal Strength Identity) and RCPI (Received Channel Power Indicator) in accordance with IEEE 802.11k specifications.

9. The method as claimed in claim 3, wherein determining the channel state involves estimating a maximum throughput of the data based on a preset value that can be practically transmitted in accordance with the channel rate.

10. The method as claimed in claim 3, wherein the number of connected wireless LAN devices is at least two or more, and wherein the data transmission information is extracted according to classification by the wireless LAN devices but the number of the received packets is excluded there from.

11. The method as claimed in claim 1, wherein data communication is executed through interfaces comprising media access control, wireless LAN device driver, IP, UDP/TCP and application layers, extracting the data transmission information is executed in the wireless LAN device driver layer, determining the channel state is executed independently of the IP and UDP/TCP layers, and controlling the data communication with the wireless LAN device based on the determined channel state is handled by the application layer.

12. The method as claimed in claim 11, wherein determining the channel state is executed in a monitoring layer that determines a channel state with respect to the wireless LAN device by comparing the preset reference value with the predetermined data transmission information extracted from the wireless LAN device driver layer.

13. The method as claimed in claim 11, wherein the application layer operates as a server for streaming video or audio data.

14. A wireless LAN device comprising:
a physical layer processor for performing any one of modulation and
demodulation of transmitted/received data, the physical layer processor being connected to a wireless LAN to which at least one other wireless LAN device is connected;
a MAC controller interfacing with the physical layer processor and performing media access control;
a memory; and
a main control unit for controlling data communication with the at least one other wireless LAN device by interfacing with the MAC controller, and for determining a channel state with respect to the at least one other wireless LAN device by extracting data transmission information regarding packet transmit/receive status and received signal strength from the MAC controller and then comparing the data transmission information with a predetermined reference value stored in the memory.

15. The device as claimed in claim 14, wherein the data communication involves a video data stream or an audio data stream, and wherein the main control unit determines an encoding rate for data streaming to the at least one other wireless LAN device based on the determined channel state.

16. The device as claimed in claim 14, wherein the data transmission information is at least one of a number of transmitted packets corresponding to a number of unicast frames whose transmission, per unit time to the wireless LAN device, has been successfully made, the number of received packets (RxFrame) corresponding to a number of frames received by the MAC controller through a communication channel with the other wireless LAN device, received signal strength corresponding to frames received from the other wireless LAN device, and a channel rate corresponding to transmission capacity per time of frames thatcan be transmitted through the MAC controller.

17. The device as claimed in claim 16, wherein the main control unit determines whether a channel state is satisfactory if the number of the transmission data packets is greater than a predefined number.

18. The device as claimed in claim 16, wherein the main control unit determines whether the number of other wireless LAN devices which are transmitting/receiving data through a relevant channel is relatively large if the number of received packets is greater than a predefine number.

19. The device as claimed in claim 16, wherein the main control unit determines the number of frames transmitted from other wireless LAN devices, which are not connected but are operating on the channel, based on a value obtained by subtracting the number of transmitted packets from the number of received packets.

20. The device as claimed in claim 16, wherein the main control unit determines whether a distance from the at least one other wireless LAN device is greater than a predefined distance or there exists an obstacle that is degrading received signal strength.

21. The device as claimed in claim 20, wherein the received signal strength is one of RSSI (Received Signal Strength Identity) or RCPI (Received Channel Power Indicator) in accordance with IEEE 802.11k specifications.

22. The device as claimed in claim 16, wherein the main control unit estimates maximum throughput of the data based on a preset value that can be practically transmitted in accordance with the channel rate.

23. The device as claimed in claim 16, wherein the number of connected other wireless LAN devices is at least two or more, and wherein the data transmission information is extracted according to classification by the wireless LAN devices but the number of the received packets is excluded therefrom.

24. The device as claimed in claim 14, wherein the main control unit comprises a wireless LAN device driver, IP, UDP/TCP and application layers, wherein the data transmission information is extracted in the wireless LAN device driver layer; wherein the channel state is executed independently of the IP and UDP/TCP layers, and wherein controlling the data communication with the other wireless LAN device is handled by the application layer.

25. The device as claimed in claim 14, wherein the MAC controller and the physical layer processor are separated from the wireless LAN device such that the controller and processor to be configured into one of a detachable structure and an external structure connectable through a separate cable.
